(19) Europäisches Patentamt / European Patent Office / Office européen des brevets

(11) EP 1 228 122 B1

(12) **EUROPEAN PATENT SPECIFICATION**

(45) Date of publication and mention of the grant of the patent:
**28.02.2007 Bulletin 2007/09**

(21) Application number: **00958834.4**

(22) Date of filing: **08.09.2000**

(51) Int Cl.:
***C08G 65/48*** (2006.01) ***C08J 5/22*** (2006.01)
***H01M 6/18*** (2006.01) ***H01M 10/40*** (2006.01)
***H01M 8/10*** (2006.01) ***H01M 2/16*** (2006.01)

(86) International application number:
**PCT/GB2000/003449**

(87) International publication number:
**WO 2001/019896 (22.03.2001 Gazette 2001/12)**

# (54) COMPOSITE ION-EXCHANGE MEMBRANES

COMPOSIT-IONENAUSTAUSCHMEMBRANEN

MEMBRANES COMPOSITES ECHANGEUSES D'IONS

(84) Designated Contracting States:
**AT BE CH CY DE DK ES FI FR GB GR IE IT LI LU MC NL PT SE**

(30) Priority: **10.09.1999 WOPCT/GB00/02833**
**22.03.2000 GB 0006884**

(43) Date of publication of application:
**07.08.2002 Bulletin 2002/32**

(73) Proprietor: **VICTREX MANUFACTURING LIMITED**
**Thornton Cleveleys**
**Lancashire FY5 4QD (GB)**

(72) Inventors:
- **WILSON, Brian**
**Garstang,**
**Lancashire PR3 1JG (GB)**
- **KEMMISH, David John**
**Preston,**
**Lancashire PR4 0WG (GB)**
- **CHARNOCK, Peter**
**Poulton-le-Fylde,**
**Lancashire FY6 7TH (GB)**
- **BRIDGES, Richard Frank**
**Poulton-le-Fylde,**
**Lancashire FY6 7TY (GB)**

(74) Representative: **Brierley, Anthony Paul et al**
**Appleyard Lees**
**15 Clare Road**
**Halifax**
**West Yorkshire HX1 2HY (GB)**

(56) References cited:
**EP-A- 0 008 895** **EP-A- 0 382 440**
**EP-A- 0 574 791** **EP-A- 0 932 213**
**WO-A-00/15691** **WO-A-96/29360**
**FR-A- 2 748 485**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a composite ion-exchange membrane and provides such a membrane per se and a method of making such a membrane.

One type of known polymer electrolyte membrane fuel cell (PEMFC), shown schematically in Figure 1 of the accompanying diagrammatic drawings, may comprise a thin sheet 2 of a hydrogen-ion conducting Polymer Electrolyte Membrane (PEM) sandwiched on both sides by a layer 4 of platinum catalyst and an electrode 6. The layers 2, 4, 6 make up a Membrane Electrode Assembly (MEA) of less than 1mm thickness.

In a PEMFC, hydrogen is introduced at the anode (fuel electrode) which results in the following electrochemical reaction:

Pt-Anode (Fuel Electrode) $2H_2 \rightarrow 4H^+ + 4e^-$

The hydrogen ions migrate through the conducting PEM to the cathode. Simultaneously, an oxidant is introduced at the cathode (oxidant electrode) where the following electrochemical reaction takes place:

Pt-Cathode (Oxidant Electrode) $O_2 + 4H^+ + 4e^- \rightarrow 2H_2O$

Thus, electrons and protons are consumed to produce water and heat. Connecting the two electrodes through an external circuit causes an electrical current to flow in the circuit and withdraw electrical power from the cell.

The PEM 2 could comprise a single layer of ion-conducting material. However, in many cases, a single layer of material does not have satisfactory mechanical properties.

It is an object of the present invention to address the above described problem.

According to a first aspect of the invention, there is provided a composite membrane as described in claim 1.

In moiety (i)* in claim 1, the middle phenyl may be 1,4- or 1,3-substituted.

Preferably, said conductive polymer and said support material do not, together, define a homogenous mixture.

Suitably, to provide said ion exchange sites, said polymer is sulphonated, phosphorylated, carboxylated, quaternary-aminoalkylated or chloromethylated, and optionally further modified to yield $-CH_2PO_3H_2$, $-CH_2NR_3^{20+}$ where $R^{20}$ is an alkyl, or $-CH_2NAr_3^{x+}$ where $Ar^x$ is an aromatic (arene), to provide a cation or anion exchange membrane. Further still, the aromatic moiety may contain a hydroxyl group which can be readily elaborated by existing methods to generate $-OSO_3H$ and $-OPO_3H_2$ cationic exchange sites on the polymer. Ion exchange sites of the type stated may be provided as described in WO95/08581.

Preferably, said first conductive polymer is sulphonated. Preferably, the only ion-exchange sites of said first conductive polymer are sites which are sulphonated.

References to sulphonation include a reference to substitution with a group $-SO_3M$ wherein M stands for one or more elements selected with due consideration to ionic valencies from the following group: H, $NR_4^{y+}$, in which $R^Y$ stands for H, $C_1$-$C_4$ alkyl, or an alkali or alkaline earth metal or a metal of sub-group 8, preferably H, $NR_4^+$, Na, K, Ca, Mg, Fe, and Pt. Preferably M represents H. Sulphonation of the type stated may be provided as described in WO96/29360.

Unless otherwise stated in this specification, a phenyl moiety may have 1,4- or 1,3-, especially 1,4-, linkages to moieties to which it is bonded.

Where phenyl moieties described may be optionally substituted, they may be optionally substituted by one or more halogen, especially fluorine and chlorine, atoms or alkyl, cycloalkyl or phenyl groups. Preferred alkyl groups are $C_{1-10}$, especially $C_{1-4}$, alkyl groups. Preferred cycloalkyl groups include cyclohexyl and multicyclic groups, for example adamantyl. In some cases, the optional substituents may be used in the cross-linking of the polymer. For example, hydrocarbon optional substituents may be functionalised, for example sulphonated, to allow a cross-linking reaction to take place. Preferably, said phenyl moieties are unsubstituted.

Another group of optional substituents of phenyl moieties include alkyls, halogens, $C_yF_{2y+1}$ where y is an integer greater than zero, $O-R^q$ (where $R^q$ is selected from the group consisting of alkyls, perfluoralkyls and aryls), $CF=CF_2$, CN, $NO_2$ and OH. Trifluormethylated phenyl moieties may be preferred in some circumstances.

Where said polymer is cross-linked, it is suitably cross-linked so as to improve its properties as a polymer electrolyte membrane, for example to reduce its swellability in water. Any suitable means may be used to effect cross-linking. For example, where E represents a sulphur atom, cross-linking between polymer chains may be effected via sulphur atoms on respective chains. Alternatively, said polymer may be cross-linked via sulphonamide bridges as described in US 5 561 202. A further alternative is to effect cross-linking as described in EP-A-0008895.

However, for polymers according to the invention described herein which are crystalline (which some are) there may be no need to effect cross-linking to produce a material which can be used as a polymer electrolyte membrane. Such polymers may be easier to prepare than cross-linked polymers. Thus, said polymer of the inventions described herein may be crystalline. Preferably, said polymer is not optionally cross-linked as described.

Where w and/or z is/are greater than zero, the respective phenylene moieties may independently have 1,4-or 1,3-linkages to the other moieties in the repeat units. Preferably, said phenylene moieties have 1,4- linkages.

Preferably, the polymeric chain of the polymer does not include a -S- moiety. Preferably, G represents a direct link.

One preferred class of polymers may include at least some ketone moieties in the polymeric chain. In such a preferred class, the polymer preferably does not only include -O- and $-SO_2-$ moieties between aryl (or other unsaturated) moieties in the polymeric chain.

Preferred polymers include an electron-rich, relatively non-deactivated, easily sulphonatable unit, for example a multi-phenylene moiety or a fused-rings aromatic moiety, such as naphthalene. Such an easy to sulphonate unit may be sulphonated under relatively mild conditions to introduce two sulphonate groups per unit. Thus, preferred polymers may have at least $10\pi$ electrons in a delocalized aromatic moiety. The number of $\pi$ electrons may be 12 or less. Preferred polymers include a biphenylene moiety. Other preferred polymers include a naphthalene moiety. Preferred polymers include said electron rich, non-deactivated, easily sulphonatable unit bonded to two oxygen atoms. Especially preferred polymers include a -O-biphenylene-O-moiety. Other especially preferred polymers include a -O-naphthalene-O- moiety.

Preferred polymers include a first type of moiety which is relatively difficult to sulphonate and a second type of moiety which is relatively easy to sulphonate. For example, said second moiety may be sulphonatable using the relatively mild method described in Example 2 hereinafter, whereas the first moiety may be substantially non-sulphonatable in such a method. The use of the method of Example 2 may be advantageous over currently used methods which use oleum. A preferred second said moiety includes a moiety -Phn- wherein n is an integer of at least 2. Said moiety is preferably bound to at least one ether oxygen. Especially preferred is the case wherein said moiety is $-O-Ph_n-O-$ where said ether groups are para to the Ph-Ph bond.

Preferred polymers are copolymers consisting essentially of a first repeat unit and a second repeat with as described.

Preferred polymers for some situations may comprise first units selected from (a), (b), (c) and (e) and second units selected from (f), (g), (h) or (i). A polymer comprising units (d) and (h) may also be preferred.

More preferred polymers are copolymers having a first repeat unit selected from those described above, especially repeat units (b), (d) or (e) in combination with a second repeat unit selected from units (f) or (h).

In some situations, polymers which include at least one repeat unit of formula IV may be preferred.

Copolymers may be prepared having one or more first repeat units and one or more of said second repeat units.

Where said polymer is a copolymer as described, the mole% of co-monomer units, for example said first and second repeat units described above, may be varied to vary the solubility of the polymer in solvents, for example in organic solvents which may be used in the preparation of films and/or membranes from the polymers and/or in other solvents, especially water.

Preferred polymers suitably have a solubility of at least 10% w/v, (especially at least 10% w/w) preferably a solubility in the range 10 to 30% w/v (especially in the range 10 to 30% w/w) in a polar aprotic solvent, for example NMP, DMSO or DMF. Preferred polymers are substantially insoluble in boiling water.

First units of the type described above (with the exception of units (a) and (c)) may be relatively difficult to sulphonate, whereas second units of the type described may be easier to sulphonate.

Where a phenyl moiety is sulphonated, it may only be mono-sulphonated. However, in some situations it may be possible to effect bi- or multi-sulphonation.

In general terms, where a said polymer includes a -O-phenyl-O- moiety, up to 100 mole% of the phenyl moieties may be sulphonated. Where a said polymer includes a -O-biphenylene-O- moiety, up to 100 mole% of the phenyl moieties may be sulphonated. It is believed to be possible to sulphonate relatively easily $-O-(phenyl)_n-O-$ moieties wherein n is an integer, suitably 1-3, at up to 100 mole%. Moieties of formula $-O-(phenyl)_n-CO-$ or $-O-(phenyl)_n-SO_2-$may also be sulphonated at up to 100 mole% but more vigorous conditions may be required. Moieties of formulae $-CO-(phenyl)_n-CO-$ and $-SO_2-(phenyl)_n-SO_2-$ are more difficult to sulphonate and may be sulphonated to a level less than 100 mole% or not at all under some sulphonation conditions.

The glass transition temperature ($T_g$) of said polymer may be at least 144°C, suitably at least 150°C, preferably at least 154°C, more preferably at least 160°C, especially at least 164°C. In some cases, the Tg may be at least 170°C, or at least 190°C or greater than 250°C or even 300°C.

Said polymer may have an inherent viscosity (IV) of at least 0.1, suitably at least 0.3, preferably at least 0.4, more preferably at least 0.6, especially at least 0.7 (which corresponds to a reduced viscosity (RV) of least 0.8) wherein RV is measured at 25°C on a solution of the polymer in concentrated sulphuric acid of density $1.84gcm^{-3}$, said solution containing 1g of polymer per $100cm^{-3}$ of solution. IV is measured at 25°C on a solution of polymer in concentrated sulphuric acid of density $1.84gcm^3$, said solution containing 0.1g of polymer per $100cm^3$ of solution.

The measurements of both RV and IV both suitably employ a viscometer having a solvent flow time of approximately 2 minutes.

The main peak of the melting endotherm (Tm) for said polymer (if crystalline) may be at least 300°C.

In general terms, said composite membrane is preferably substantially stable when used as a PEM in a fuel cell. Thus, it suitably has high resistance to oxidation, reduction and hydrolysis and has very low permeability to reactants in the fuel cell. Preferably, however, it has a high proton conductivity. Furthermore, it suitably has high mechanical strength and is capable of being bonded to other components which make up a membrane electrode assembly.

Said polymer may comprise a film, suitably having a thickness of less than 1mm, preferably less than 0.5mm, more preferably less than 0.1mm, especially less than 0.05 mm. The film may have a thickness of at least 5μm.

Said polymer electrolyte membrane may comprise one or more layers wherein, suitably, at least one layer comprises a film of said polymer. Said membrane may have a thickness of at least 5μm and, suitably, less than 1mm, preferably less than 0.5mm, more preferably less than 0.1mm, especially less than 0.05mm.

Said support material suitably imports mechanical strength and dimensional stability to the composite membrane. The polymer may be associated with the support material to form a composite membrane in a variety of ways. For example, an unsupported conductive polymer film can be preformed and laminated to the support material. Alternatively, (and preferably) the support material may be porous and a solution of the conductive polymer can be impregnated into the support material. Said support material may comprise or consist essentially of an optionally-substituted polyolefin. Preferred polyolefins are optionally-substituted polyethylene and polypropylene. In one embodiment, the support material may comprise, or preferably consist essentially of, polytetrafluoroethylene or surface modified polytetrofluoroethylene, suitably provided as a porous film. Such a support material may be as described and used in accordance with the teachings of WO97/25369 and WO96/28242, the contents of which are incorporated herein by reference. Suitably, the support material has a porous microstructure of polymeric fibrils and is impregnated with said polymer throughout the material, preferably so as to render an interior volume of the membrane substantially occlusive.

Said support material may be made of any polymer described in claim 10. Suitably, functionalisation of said support material is greater at the surface than in interior regions thereof. The EW of said support material may be greater than 2000. Thus, said support material may comprise a polymer having moieties I, II and/or III or a homopolymer or copolymer comprising units IV and/or V.

Preferably said support material is selected from the homopolymers described in claim 11.

Blends of the abovementioned materials may be used.

Said support material may be any support material described in WO99/10165 the content of which is incorporated herein, as regards said support materials.

Said support material is preferably impregnated with said conductive polymer. Said support material is preferably porous and, suitably, said conductive polymer is arranged in pores of said support material, preferably so as to render an interior volume of the support material substantially occlusive.

A said porous support material may be provided by a fabric which may have warp and weft strands or may comprise an irregular arrangement of fibres. Suitably, said pores are defined by the void volume of the fabric - that is between the fibres. However, the fibres of the fabric themselves may be porous and penetrated by said conductive polymer. Alternatively, a said porous support material may be microporous and may suitably be made by a phase inversion process as hereinafter described. Such a microporous material preferably has no through pores and/or contains no closed pores.

Preferably, said support material and said conductive polymer are in intimate contact. Whilst the two materials preferably do not together define a homogeneous material, the support material and conductive polymer preferably intermingle (as would happen if, for example a surface of the support material was dissolved and contacted with said conductive material) in a boundary region between the two materials.

The use of support material as described may allow polymers of lower equivalent weights (EW) (for example less than 800g/mol, less than 700 g/mol, less than 600 g/mol, suitably less than 500 g/mol, preferably less than 450 g/mol or even less than 400 g/mol or 370 g/mol) or relatively inflexible and/or brittle polymers to be used as said conductive polymer in said composite membrane.

The composite membrane suitably includes a catalyst material (preferably a layer of a catalyst material) which is suitably a platinum catalyst (i.e. platinum containing) or a mixture of platinum and ruthenium, on both sides of the support material/conductive polymer arrangement described. Electrodes may be provided outside the catalyst material.

It may be preferable for each phenyl group in a conductive polymer (e.g. a sulphonated polymer) as described to be deactivated by being bonded directly to an electron withdrawing group, for example a sulphonated group, a sulphone group or a ketone group.

According to a second aspect of the invention, there is provided a composite membrane which includes a conductive polymer and a support material for the polymer, wherein said polymer includes: polyaryletherketone and/or polyarylethersulphone units; and units of formula $-O-Ph_n-O-$ (XX) wherein Ph represents a phenyl group and n represents an integer of 2 or greater and wherein Ph groups of units (XX) are sulphonated.

Preferably, each phenyl group of moiety $Ph_n$ is sulphonated, preferably mono-sulphonated. About 100 mole% of such phenyl groups may be sulphonated as described.

Preferably, -OPhCO- and/or $-OPhSO_2-$ moieties of said polymer are sulphonated to a lesser extent than the

phenyl groups of moiety $Ph_n$. Moieties -OPhCO- and -OPh$SO_2$- may be substantially non-sulphonated.

In one embodiment, said polymer may include no ketone linkages and may have an equivalent weight of more than 900. Nonetheless, it has been found, surprisingly, that such polymers are still conducting.

Said composite membrane may be for a fuel cell or an electrolyser.

In addition to the utility of the composite membranes described herein as ion-exchange membranes for electrochemical fuel cells, the following further utilities are also contemplated:

1. Proton exchange membrane based water electrolysis, which involves a reverse chemical reaction to that employed in hydrogen/oxygen electrochemical fuel cells.
2. Chloralkali electrolysis, typically involving the electrolysis of a brine solution to produce chlorine and sodium hydroxide, with hydrogen as a by-product.
3. Electrode separators in conventional batteries due to the chemical inertness and high electrical conductivity of the composite membranes.
4. Ion-selective electrodes, particularly those used for the potentiometric determination of a specific ion such as $Ca^{2+}$, $Na^+$, $K^+$ and like ions. The composite membrane could also be employed as the sensor material for humidity sensors, as the electrical conductivity of an ion exchange membrane varies with humidity.
5. Ion-exchange material for separations by ion-exchange chromatography. Typical such applications are deionization and desalination of water (for example, the purification of heavy metal contaminated water), ion separations (for example, rare-earth metal ions, trans-uranium elements), and the removal of interfering ionic species.
6. Ion-exchange membranes employed in analytical preconcentration techniques (Donnan Dialysis). This technique is typically employed in analytical chemical processes to concentrate dilute ionic species to be analysed.
7. Ion-exchange membranes in electrodialysis, in which membranes are employed to separate components of an ionic solution under the driving force of an electrical current. Electrolysis applications include the industrial-scale desalination of brackish water, preparation of boiler feed make-up and chemical process water, de-ashing of sugar solutions, deacidification of citrus juices, separation of amino acids, and the like.
8. Membranes in dialysis applications, in which solutes diffuse from one side of the membrane (the feed side) to the other side according to their concentration gradient. Separation between solutes is obtained as a result of differences in diffusion rates across the membrane arising from differences in molecular size. Such applications include hemodialysis (artificial kidneys) and the removal of alcohol from beer.
9. Membranes in gas separation (gas permeation) and pervaporation (liquid permeation) techniques.
10. Bipolar membranes employed in water splitting and subsequently in the recovery of acids and bases from waste water solutions.

The conductive polymer described herein may include a blend of polymers, at least one of which is a polymer described according to the invention described herein. Suitably the conductive polymers herein are blended with 0-40wt%, preferably 0-20wt%, more preferably 0-10wt%, especially 0-5wt% of other polymeric materials. Preferably, however, a blend of polymers is not provided.

In preferred embodiments, there is provided a fuel cell or an electrolyser (especially a fuel cell) incorporating a polymer electrolyte membrane according to the first or second aspects. The fuel cell may be a hydrogen or direct methanol fuel cell.

Polymers having units IV, and/or V may be prepared by:

(a) polycondensing a compound of general formula

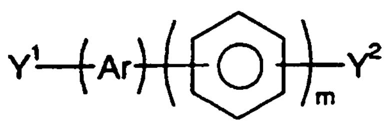

VI

with itself wherein $Y^1$ represents a halogen atom or a group -EH and $Y^2$ represents a halogen atom or, if $Y^1$ represents a halogen atom, $Y^2$ represents a group E'H; or

(b) polycondensing a compound of general formula

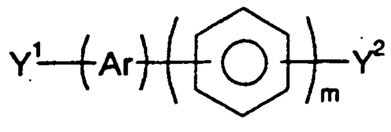

VI

with a compound of formula

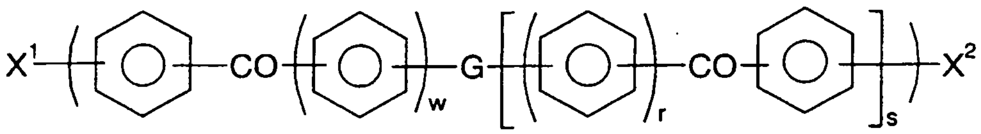

VII

and/or with a compound of formula

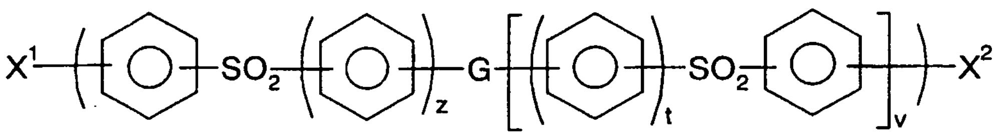

VIII

wherein $Y^1$ represents a halogen atom or a group -EH (or -E'H if appropriate) and $X^1$ represents the other one of a halogen atom or group -EH (or -E'H if appropriate) and $Y^2$ represents a halogen atom or a group -E'H and $X^2$ represents the other one of a halogen atom or a group -E'H (or -EH if appropriate).

(c) optionally copolymerizing a product of a process as described in paragraph (a) with a product of a process as described in paragraph (b);
wherein the phenyl moieties of units VI, VII and/or VIII are optionally substituted; the compounds VI, VII and/or VIII are optionally sulphonated; and Ar, m, w, r, s, z, t, v, G, E and E' are as described above except that E and E' do not represent a direct link;
the process also optionally comprising sulphonating and/or cross-linking a product of the reaction described in paragraphs (a), (b) and/or (c) to prepare said polymer.

In some situations, the polymer prepared, more particularly phenyl groups thereof, may be optionally substituted with the groups hereinabove described after polymer formation.

Preferably, where $Y^1$, $Y^2$, $X^1$ and/or $X^2$ represent a halogen, especially a fluorine, atom, an activating group, especially a carbonyl or sulphone group, is arranged ortho- or para- to the halogen atom.

Preferred halogen atoms are fluorine and chlorine atoms, with fluorine atoms being especially preferred. Preferably, halogen atoms are arranged meta- or para- to activating groups, especially carbonyl groups.

Wherein the process described in paragraph (a) is carried out, preferably one of $Y^1$ and $Y^2$ represents a fluorine atom and the other represents an hydroxy group. More preferably in this case, $Y^1$ represents a fluorine atom and $Y^2$ represents an hydroxy group. Advantageously, the process described in paragraph (a) may be used when Ar represents a moiety of structure (i) and m represents 1.

When a process described in paragraph (b) is carried out, preferably, $Y^1$ and $Y^2$ each represent an hydroxy group. Preferably, $X^1$ and $X^2$ each represent a halogen atom, suitably the same halogen atom.

Compounds of general formula VI, VII and VIII are commercially available (eg from Aldrich U.K) and/or may be prepared by standard techniques, generally involving Friedel-Crafts reactions, followed by appropriate derivatisation of functional groups. The preparations of some of the monomers described herein are described in P M Hergenrother, B J Jensen and S J Havens, Polymer 29, 358 (1988), H R Kricheldorf and U Delius, Macromolecules 22, 517 (1989) and P A Staniland, Bull, Soc, Chem, Belg., 98 (9-10), 667 (1989).

Where compounds VI, VII and/or VIII are sulphonated, compounds of formulas VI, VII and/or VIII which are not sulphonated may be prepared and such compounds may be sulphonated prior to said polycondensation reaction.

Sulphonation as described herein may be carried out in concentrated sulphuric acid (suitably at least 96% w/w. preferably at least 97%w/w, more preferably at least 98%w/w; and preferably less than 98.5%w/w) at an elevated

temperature. For example, dried polymer may be contacted with sulphuric acid and heated with stirring at a temperature of greater than 40°C, preferably greater than 55°C, for at least one hour, preferably at least two hours, more preferably about three hours. The desired product may be caused to precipitate, suitably by contact with cooled water, and isolated by standard techniques. Sulphonation may also be effected as described in US5362836 and/or EP0041780.

According to another aspect of the invention, there is provided a method of making a composite membrane as described herein, the method comprising causing a conductive polymer as described herein to be associated with a support material as described herein.

The conductive polymer may be associated with the support material in a variety of ways. The method may involve laminating conducting polymer and support material together. Preferably, however, the method involves impregnating porous support material with said conductive polymer.

Said porous support material may be a fabric or a microporous membrane.

Where said porous support material is a fabric, the method may include a step of contacting the fabric with a first solvent formulation comprising a first solvent and a conductive polymer, wherein the conductive polymer is preferably dissolved in the first solvent. Said fabric may, therefore, be impregnated with said formulation. Thereafter, said first solvent may be removed, leaving said conductive polymer in pores of said fabric.

Said first solvent and said porous support material may be selected so that said first solvent solubilises, to some degree, a surface of the support material. Said first solvent may be capable of dissolving the support material to a level of at least 5wt%. This may improve contact between the conductive polymer and said support material. Optionally, said first solvent may be capable of functionalizing (e.g. sulphonating) said support material to provide ion-exchange site on a surface thereof as hereinbefore described.

Said first solvent may be a polar aprotic solvent, for example NMP, or may be a protic solvent. A polar aprotic solvent may not be capable of solubilising said porous support material whereas a protic solvent may be able to solubilize and, in some cases, functionalise (e.g. sulphonate) said porous support material.

Where said first solvent is a protic solvent, said solvent preferably comprises or consists essentially of a strong acid solvent. Said solvent may comprise at least 90%, preferably at least 95%, more preferably at least 97%, especially at least 98% acid. Said strong acid solvent may be one or more of sulphuric acid, a sulphonic acid (e.g. methane sulphonic acid, trichloromethane sulphonic acid, trifluoromethane sulphonic acid), hydrofluoric acid and phosphoric acid.

Preferably, a said protic first solvent comprises or consists essentially of sulphuric acid. Said solvent may include at least 96%, preferably at least 98% acid. Said solvent may include less than 99% acid. A said protic first solvent is preferably arranged to sulphonate easy to sulphonate units described herein, but not difficult to sulphonate units.

In one embodiment, said fabric may be polyetheretherketone (e.g. PEEK™) and this may be contacted with a formulation comprising the conductive polymer in sulphuric acid, whereby the sulphuric acid dissolves the surface of fibres of the polyetheretherketone and sulphonates it and the conductive polymer penetrates pores defined between fibres of the fabric. Thereafter, phase inversion may be effected, suitably by contact with a non-solvent (e.g. water). After drying, the arrangement may be contacted with a formulation of the conductive polymer in a polar aprotic solvent which will not substantially attack the polyetheretherketone, but may dissolve to some extent the conductive polymer already in the pores. In another embodiment, polyetherketone (e.g. PEK™) may be used in the process described instead of polyetheretherketone. In this case, the polyetherketone is dissolved by the sulphuric acid, but not surface sulphonated. Otherwise the process is as described for the treatment of polyetheretherketone.

In another embodiment, the first solvent may be a polar aprotic solvent (e.g. NMP) in which, suitably, a conductive material (e.g. SPEDEK/PEKES) is provided, and said support material is a material (e.g. polyetheretherketone, especially PEEK™, suitably as a fabric) which is not solubilized by said solvent, so that, suitably, the surface of said support material is not solubilized. In a further embodiment, the first solvent may be a polar aprotic solvent (e.g. NMP) in which, suitably, a conductive material (e.g. SPEDEK/PEKES) is provided, and said support material is a microporous membrane suitably made of a material (e.g. polyetherketone, especially PEK™) which is not solubilized by said solvent, so that suitably the surface of said support material is not solubilized.

Where said support is a microporous membrane, preparation of the membrane may include a step of contacting a support material as described herein with a solvent formulation comprising said first solvent. Said first solvent preferably solubilizes the support material. Subsequently, the method preferably includes the step of contacting the support material with a second solvent. Said second solvent is preferably arranged to cause phase inversion. Phase inversion suitably results in said support material being rendered porous. Said second solvent is preferably a non-solvent for said support material. Preferred second solvents are aqueous; especially preferred is water.

Said microporous support material is preferably contacted with said conductive polymer so that said polymer penetrates into pores formed in said porous material. Said conductive polymer may be provided in a third solvent, thereby to penetrate pores in said support material. Said third solvent is preferably a polar aprotic solvent. NMP is a suitable solvent. Thereafter, the third solvent is evaporated.

Said third solvent may have the same identity as said first solvent described above. Said conductive material may be contacted with said support material in the first solvent. Phase inversion may then be caused as described above

which results in said conductive polymer being deposited in the pores formed by the phase inversion. After deposition of said conductive polymer in pores, as described above, the arrangement may be post-treated, suitably so as to produce a substantially continuous film of said conductive polymer on the support material. Posttreatment may include the step of contacting the composite membrane which comprises conductive polymer in pores of said support material with a third solvent in which said conductive polymer is relatively soluble and said support material is substantially insoluble. This may cause some dissolution of the conductive polymer in the pores resulting in film formation by coalescence of material between pores. Optionally, a said conductive polymer may be provided in said third solvent, thereby to penetrate pores in said support material. Said third solvent is preferably a polar aprotic solvent. NMP is a suitable solvent. Thereafter, the third solvent is evaporated.

The method may include a subsequent step of associating a catalyst material with the composite membrane prepared as described.

A said composite membrane described herein may be used in fuel cells or electrolysers and, accordingly, the invention extends to a fuel cell or electrolyser incorporating a composite membrane as described.

Any feature of any aspect of any invention or embodiment described herein may be combined with any feature of any aspect of any other invention or embodiment described herein.

Specific embodiments of the invention will now be described, by way of example, with reference to figure 1 which is a schematic representation of a polymer electrolyte membrane fuel cell.

The abbreviation NMP referred to means N-methylpyrrolidone.

PEEK™ and PEK™ are trade marks of Victrex Plc for polyetheretherketone and polyetherketone respectively.

In the specification sulphonated polyether(biphenyl)etherketone is referred to as SPEDEK; and polyetherketoneethersulphone is referred to PEKES. Where a copolymer is followed by a ratio (e.g. SPEDEK/PEKES (1:1:5)), the ratio refers to the molar ratio of the polymeric components (e.g. the mole ratio of SPEDEK to PEKES is 1 to 1.5).

A PEM 2 may comprise a layer of an ion-conducting material in combination with a layer of a reinforcing material, as described further below.

<u>Example 1</u>

A 700ml flanged flask fitted with a ground glass Quickfit lid, stirrer/stirrer guide, nitrogen inlet and outlet was charged with 4,4'-difluorobenzophenone (89.03g, 0.408 mole), 4,4'-dihydroxybiphenyl (29.79g, 0.16 mole) 4,4'-dihydroxydiphenylsulphone (60.06g, 0.24 mole), and diphenysulphone (332g) and purged with nitrogen for over 1 hour. The contents were then heated under a nitrogen blanket to between 140 and 150°C to form an almost colourless solution. While maintaining a nitrogen blanket, dried sodium carbonate (43.24g, 0.408 mole) was added. The temperature was raised gradually to 315°C over 3 hours then maintained for 0.5 hours.

The reaction mixture was allowed to cool, milled and washed with acetone and water. The resulting polymer was dried in an air oven at 120°C. The polymer had a melt viscosity at 400°C, 1000$sec^{-1}$ of 0.6 $kNsm^{-2}$; and a Tg of 188°C.

<u>Example 2</u>

The polymer of Example 1 was sulphonated by stirring each polymer in 98% sulphuric acid (3.84g polymer/100g sulphuric acid) for 21 hours at 50°C. Thereafter, the reaction solution was allowed to drip into stirred deionised water. Sulphonated polymer precipitated as free-flowing beads. Recovery was by filtration, followed by washing with deionised water until the pH was neutral and subsequent drying. In general, $^1H$ nmr in DMSO-d6 confirmed that 100 mole% of the biphenyl units had sulphonated, giving one sulphonic acid group, ortho to the ether linkage, on each of the two aromatic rings comprising the biphenyl unit, giving an Equivalent Weight of 583.

<u>Example 3</u>

Membranes were produced from the polymer from Example 2 after sulphonation as described in Example 2 by dissolving the polymer in N-methylpyrrolidone (NMP) at a concentration of 15% w/w. The homogeneous solution was cast onto clean glass plates and then drawn down to give 400 micron films, using a stainless steel Gardner Knife. Evaporation at 100°C under vacuum for 24 hours produced membranes of mean thickness 40 microns.

<u>Example 4</u>

The substrate, a piece of PEEK™ fabric having a thickness of 70μm and weight/unit area of $1.7x10^{-3}g.cm^{-2}$ was clamped in a 10 cm diameter circular frame and immersed in a 15% (w/w) solution of SPEDEK/PEKES(1:1:5) prepared in Example 2 in NMP. The wetted substrate was placed in vacuum oven at 105°C for 1.5 hrs to remove the NMP. The dry composite membrane was placed on a glass plate and a 50 μm thick wet coating of the solution of

SPEDEK/PEKES prepared in Example 2 in NMP was applied with a Doctor Blade and dried in a vacuum oven at 105°C for 20 hrs to remove the NMP. The resulting composite membrane had a mean thickness of 70 μm. The weight ratio of ion-conducting membrane to PEEK™ fabric was 70:30. The unreinforced membrane of Example 3 was highly swollen and fragile after immersion in boiling water for 1 hour, whereas the composite membrane was strong and flexible. Example 5 - Comparison of Fuel Cell Performance of Reinforced Composite Membrane prepared in Example 4 with Unreinforced Membrane of Example 3.

The reinforced composite membrane prepared in Example 4 and the unreinforced membrane prepared in Example 3 were pre-treated by boiling in 1M sulphuric acid, allowed to cool to room temperature followed by thorough washing with deionised water. Membrane Electrode Assemblies (MEA) were prepared using standard platinum loaded, Nafion® impregnated Gas Diffusion Electrodes (E-Tek, Elat 0.35mg Pt $cm^{-2}$) hot pressed onto the membrane, the active area being $11.8cm^2$. The following operating conditions were followed:

| | |
|---|---|
| Hydrogen Pressure | 3Barg |
| Air Pressure | 3Barg |
| Hydrogen Stoichiometry | 1.5 |
| Air Stoichiometry | 3 |
| Cell Temperature | 50°C |
| Current Density | $0.7Acm^{-2}$ |

The MEA using the unreinforced membrane punctured after 30hrs, whereas the reinforced composite membrane continued operating for over 400 hrs.

Example 6

The substrate, a 150 mm by 130 mm piece of PEEK™ fabric as described in Example 4 was clamped to a glass plate, impregnated with a 10% (w/w) solution of the SPEDEK/PEKES prepared in Example 2 in 98% sulphuric acid and immediately immersed in de-ionized water. The composite membrane was dried then coated using a Doctor Blade with a coating of a 15% (w/w) solution of SPEDEK/PEKES prepared in Example 2 in NMP, to 100 μm wet thickness and dried. Compared to the unreinforced membrane described in Example 3 which was highly swollen and fragile after immersion in boiling water for 1 hour, the composite membrane was strong and flexible.

Example 7

The procedure described in Example 6 was followed except that instead of coating with SPEDEK/PEKES in NMP, the composite membrane was coated with NMP alone, left for 30 minutes and dried. Compared to the unreinforced membrane described in Example 3 which was highly swollen and fragile after immersion in boiling water for 1 hour, the composite was strong and flexible.

Example 8

A 10% (w/w) solution of PEK™ (Grade P22, obtained from Victrex Plc, UK, having a Melt Viscosity of 0.22 kN $sm^{-2}$) in 98% sulphuric acid was cast onto a glass plate to produce a 100 μm wet thickness coating. The plate was immersed in deionized water, removed, dried under vacuum at 105°C, thereby producing a microporous membrane. This membrane was then impregnated with a 15% (w/w) solution of SPEDEK/PEKES prepared in Example 2 in NMP to produce a wet thickness of the solution of 250 μm, followed by drying for 20 hours at 105 °C producing a membrane of mean thickness 50 microns. The weight ratio of ion-conducting membrane to PEK™ microporous membrane was 80: 20. Compared to the unreinforced membrane described in Example 3 which was highly swollen and fragile after immersion in boiling water for 1 hour, the composite membrane was strong and flexible.

Example 9

A 5cm x 5cm x 50 microns sample of membrane from Example 8 and a 5cm x 5cm x 40 microns sample of the membrane from Example 3 were separately immersed in boiling deionised water (500 ml) for 60 mins, removed and dried quickly with lint-free paper to remove surface water, weighed, dried in an oven at 50°C for 1 day, allowed to cool to ambient temperature in a desiccator then weighed quickly. The % water-uptakes were 132% and 520% for the reinforced composite membrane and unreinforced membrane respectively, as calculated below.

$$\% \text{ Water-uptake} = \frac{\text{Wet Weight} - \text{Dry Weight}}{\text{Dry Weight}} \times 100$$

Example 10

A 10% (w/w) solution of PES was dissolved in 98% sulphuric acid and was cast onto a glass plate to produce a 100 μm wet thickness coating. The plate was immersed in deionized water, removed, dried under vacuum at 105°C, thereby producing a microporous membrane. This membrane was then impregnated with a 15% (w/w) solution of SPEDEK/PEKES prepared in Example 2 in NMP to produce a wet thickness of the solution of 250 μm, followed by drying for 20 hours at 105°C. Compared to the unreinforced membrane described in Example 3 which was highly swollen and fragile after immersion in boiling water for 1 hour, the composite membrane was strong and flexible.

Example 11

The substrate, a 10 cm by 10 cm piece of PTFE fabric was clamped to a glass plate, impregnated with a 5% (w/w) solution of the SPEDEK/PEKES polymer prepared in Example 2 in NMP/methanol (30:70; w/w) and immersed in de-ionized water. The composite membrane was dried then coated using a Doctor Blade with a coating of a 5% (w/w) solution of SPEDEK/PEKES polymer prepared in Example 2 in NMP/methanol (30:70; w/w), to 250 μm wet thickness and dried. The coating procedure was repeated. Compared to the unreinforced membrane described in Example 3 which was highly swollen and fragile after immersion in boiling water for 1 hour, the composite membrane was strong and flexible.

Example 12

A 7% (w/w) solution of Victrex ® PEEK™ (Grade 450G, obtained from Victrex Plc, UK, having a Melt Viscosity of 0.45kNsm$^{-2}$) in methanesulphonic acid was cast onto a glass plate to produce a 100 μm wet thickness coating. The plate was immersed in deionized water, removed, dried under vacuum at 105°C, thereby producing a microporous membrane. This membrane was then impregnated with a 15% (w/w) solution of SPEDEK/PEKES prepared in Example 2 in NMP to produce a wet thickness of the solution of 250 μm, followed by drying for 20 hours at 105 °C. Compared to the wet unreinforced membrane described in Example 3 which was highly swollen and fragile, the wet composite membrane was strong and flexible.

**Claims**

1. A composite membrane which includes an ion-conductive polymer and a support material for the polymer, said ion-conductive polymer being a random or block copolymer of at least two different units of IV and/or V, wherein IV and V are as shown below

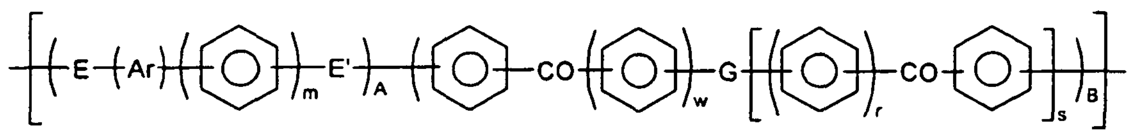

IV

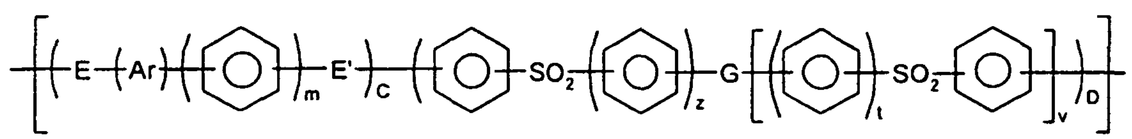

V

wherein at least some of the units in the copolymer are functionalized to provide ion exchange sites; wherein the phenyl moieties in units IV and V are independently optionally substituted and optionally cross-linked; and wherein

m,r,s,t,v,w and z independently represent zero or a positive integer, E and E' independently represent an oxygen or a sulphur atom or a direct link, G represents an oxygen or sulphur atom, a direct link or a -O-Ph-O- moiety where Ph represents a phenyl group and Ar is selected from one of the following moieties (i), (ii) or (iv) which is bonded via one or more of its phenyl moieties to adjacent moieties

(i) 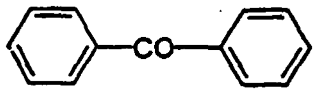

(ii) 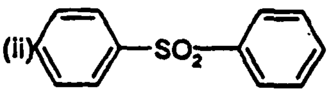

(iv) 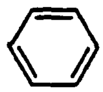

wherein said ion-conductive polymer comprises a first repeat unit which is selected from the following:

(a) a unit of formula IV wherein E and E' represent oxygen atoms, G represents a direct link, Ar represents a moiety of structure (iv), m and s represent zero, w represents 1 and A and B represent 1;
(b) a unit of formula IV wherein E represents an oxygen atom, E' represents a direct link, Ar represents a moiety of structure (i), m represents zero, A represents 1, B represents zero;
(c) a unit of formula V wherein E and E' represent oxygen atoms, G represents a direct link, Ar represents a moiety of structure (iv), m and v represent zero, z represents 1 and C and D represent 1;
(d) a unit of formula V wherein E represents an oxygen atom, E' represents a direct link, Ar represents a moiety of structure (ii), m represents 0, C represents 1, D represents 0; and
(e) a unit of formula V wherein E and E' represents an oxygen atom, Ar represents a structure (i), m represents 0, C represents 1, Z represents 1, G represents a direct link, v represents 0 and D represents 1;

and a second repeat unit which is selected from the following:

(f) a unit of formula IV wherein E and E' represent oxygen atoms, G represents a direct link, Ar represents a moiety of structure (iv), m represents 1, w represents 1, s represents zero, A and B represent 1;
(g) a unit of formula IV wherein E represents an oxygen atom, E' is a direct link, G represents a direct link, Ar represents a moiety of structure (iv), m and s represent zero, w represent 1, A and B represent 1;
(h) a unit of formula V wherein E and E' represent oxygen atoms, G represents a direct link, Ar represents a moiety of structure (iv), m represents 1, z represents 1, v represents 0, C and D represent 1;
(i) a unit of formula V wherein E represents an oxygen atom, E' represents a direct link, G represents a direct link, Ar represents a moiety of structure (iv), m and v represent zero, z represents 1, C and D represent 1.

**2.** A membrane according to claim 1, where said ion-conductive polymer is sulphonated.

**3.** A membrane according to claim 1 or claim 2, wherein said ion-conductive polymer is crystalline.

**4.** A membrane according to any preceding claim, wherein said ion-conductive polymer includes at least some ketone moieties in the polymeric chain.

**5.** A membrane according to any preceding claim, wherein said ion-conductive polymer includes a first repeat unit selected from repeat units (b), (d) or (e) in combination with a second repeat unit selected from units (f) or (h).

**6.** A membrane according to any preceding claim, wherein said ion-conductive polymer includes a biphenylene moiety.

**7.** A membrane according to any preceding claim, wherein said ion-conductive polymer includes a -O-biphenylene-O- moiety.

**8.** A membrane according to any preceding claim, wherein a film of said ion-conductive polymer is laminated to the

support material.

**9.** A membrane according to any of claims 1 to 7, wherein the support material is porous and said ion-conductive polymer is impregnated in the support material.

**10.** A membrane according to any preceding claim, wherein said support material comprises a polymer having a moiety of formula

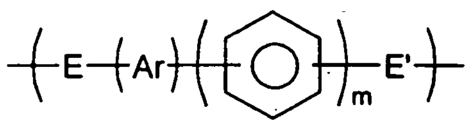

I

and/or a moiety of formula

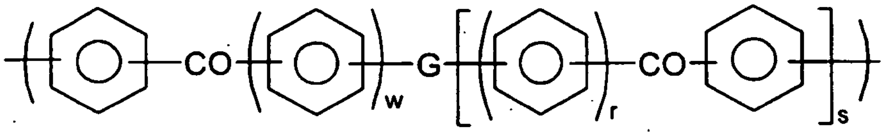

II

and/or a moiety of formula

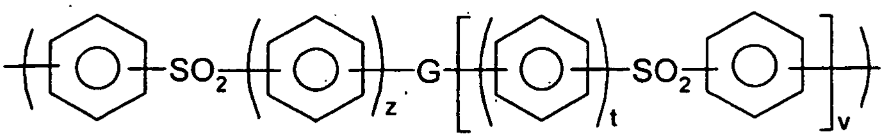

III

wherein m, r, s, t, v, w and z independently represent zero or a positive integer, E and E' independently represent an oxygen or a sulphur atom or a direct link, G represents an oxygen or sulphur atom, a direct link or a -O-Ph-O- moiety where Ph represents a phenyl group and Ar is selected from one of the following moieties (i)* and (i) to (x) which is bonded via one or more of its phenyl moieties to adjacent moieties

(i)* 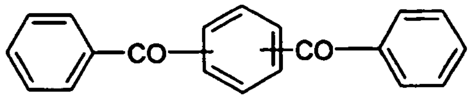

(i) 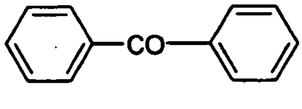

(ii) 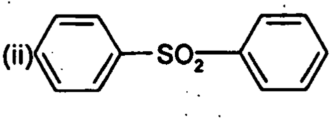

(iii) 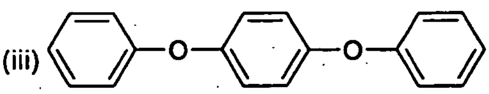

(iv) 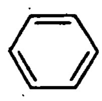

(v) 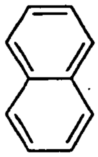 (vi) 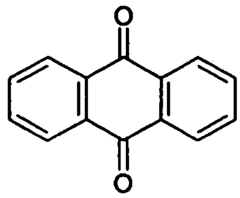 (vii) 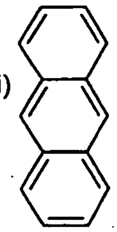

(viii) 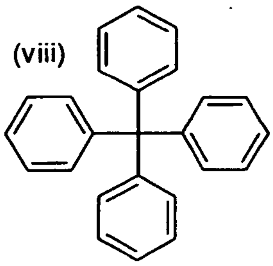 (ix) 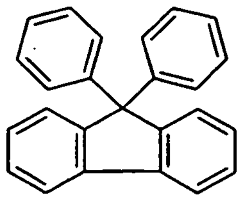 (x) 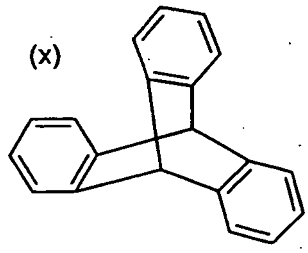

except that the polymer of the support material is either not sulphonated (or otherwise functionalised to provide ion-exchange sites) or is only sulphonated (or otherwise functionalised to provide ion-exchange sites) at or in the region of the surface of the support material.

**11.** A membrane according to claim 10, wherein said support material is selected from a homopolymer of formula IV wherein:

- E and E' represent oxygen atoms, G represents a direct link, Ar represents a moiety of structure (iv), m and s represent zero, w represents 1 and A and B represent 1;
- E represents an oxygen atom, E' represents a direct link, Ar represents a moiety of structure (i), m represents zero, A represents 1, B represents zero;
- Ar represents a moiety (iv), E and E' represent oxygen atoms, G represents a direct link, m represents 0, w represents 0, s represents 1, r represents 1 and A and B represent 1;
- Ar represents a structure (i)*, E represents an oxygen atom, E' represents a direct link, m represents 0, A represents 1, B represents 0;
- Ar represents moiety (i), E and E' represent oxygen atoms, G represents a direct link, m represents zero, w represents 1, r represents 0, s represents 1 and A and B represent 1; or
- Ar represent moiety (iv), E represents a sulphur atom, m represents 0, E' represents a direct link and B represents 0;

or is selected from:

- a homopolymer of formula V wherein E represents an oxygen atom, E' represents a direct link, Ar represents a moiety of structure (ii), m represents 0, C represents 1, D represents 0; and is selected from:
- a homopolymer of formula v wherein E and E' represent oxygen atoms, m represents zero, C and D represent 1, z represents 1, G represents a direct link, v represents zero and Ar represents a moiety of structure:

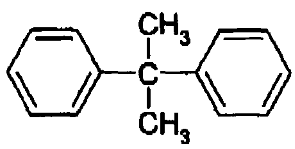

**12.** A membrane according to any preceding claim, wherein said ion-conductive polymeric material has an equivalent

weight (EW) of less than 800g/mol.

**13.** A conductive polymer and a support material impregnated with the conductive polymer, wherein said polymer includes: polyaryletherketone and/or polyarylethersulphone units; and units of formula -O-$Ph_n$-O- (XX) wherein Ph represents a phenyl group and n represents an integer of 2 or greater and wherein Ph groups of units (XX) are sulphonated.

**14.** A fuel cell or electroylser incorporating a composite membrane according to any preceding claim.

**15.** A method of making a composite membrane according to any of claims 1 to 13, the method comprising causing a conductive polymer as described in any of claims 1 to 13 to be associated with a support material as described in any of claims 1 to 13.

**16.** A method according to claim 15, which includes impregnating porous support material with conductive polymer.

**17.** A method according to claim 15 or claim 16, wherein a first solvent formulation comprises a polar aprotic solvent in which a conductive polymer is provided and said support material is a material which is not soluble in said polar aprotic solvent, wherein the method includes a step of contacting said support material with said first solvent formulation.

**18.** A method according to claim 15 or claim 16, wherein said support material is a fabric and the method includes a step of contacting the fabric with a first solvent formulation comprising a first solvent and said conductive polymer, wherein said first solvent and said support material are selected so that the first solvent solubilizes a surface of the support material.

**19.** A method according to claim 18, wherein said first solvent is capable of functionalising said support material to provide ion-exchange sites on the surface thereof.

**20.** A method according to claim 19, wherein said first solvent includes less than 99% acid.

**21.** A method according to claim 15 or claim 16, the method including:

contacting said support material with a solvent formulation comprising a first solvent which solubilizes the support material; and
contacting the support material with a second solvent to cause phase inversion and render said support material porous.

**22.** A method according to claim 21, wherein said conductive polymer is provided in a third solvent and caused to penetrate pores in the support material.

## Patentansprüche

**1.** Compositmembran, die ein Ionen-leitfähiges Polymer und ein Trägermaterial für das Polymer einschließt, wobei das Ionen-leitfähige Polymer ein statistisches oder BlockCopolymer von mindestens zwei verschiedenen Einheiten von IV und/oder V darstellt, wobei IV und V wie nachstehend gezeigt sind,

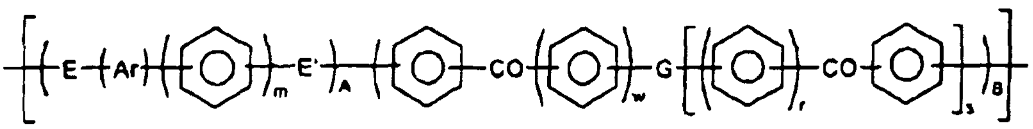

IV

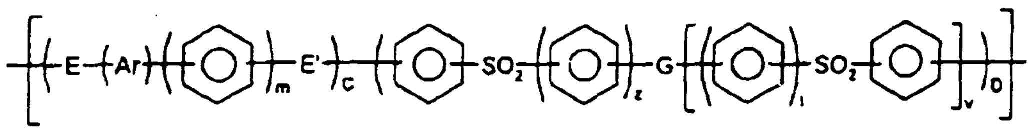

V

worin mindestens einige der Einheiten in dem Copolymer funktionalisiert sind, um Ionenaustauschstellen bereitzustellen; wobei die Phenyleinheiten in Einheiten IV und V unabhängig gegebenenfalls substituiert und gegebenenfalls vernetzt sind; und worin m, r, s, t, v, w und z unabhängig null oder eine positive ganze Zahl wiedergeben, E und E' unabhängig ein Sauerstoff- oder ein Schwefelatom oder eine direkte Bindung wiedergeben, G ein Sauerstoff- oder Schwefelatom, eine direkte Bindung oder eine Einheit -O-Ph-O-wiedergibt, worin Ph eine Phenylgruppe wiedergibt und Ar ausgewählt ist aus einer der nachstehenden Einheiten (i), (ii) oder (iv), die über eine oder mehrere von ihren Phenyleinheiten an benachbarte Einheiten gebunden ist,

(i) 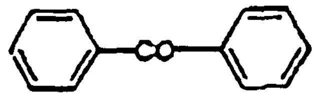 (ii) 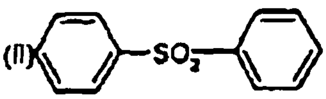 (iv) 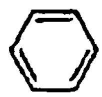

wobei das Ionen-leitfähige Polymer eine erste wiederkehrende Einheit, die ausgewählt ist aus den nachstehenden:

(a) einer Einheit der Formel IV, worin E und E' Sauerstoffatome wiedergeben, G eine direkte Bindung wiedergibt, Ar eine Einheit der Struktur (iv) wiedergibt, m und s null wiedergeben, w 1 wiedergibt und A und B 1 wiedergeben;
(b) einer Einheit der Formel IV, worin E ein Sauerstoffatom wiedergibt, E' eine direkte Bindung wiedergibt, Ar eine Einheit der Struktur (i) wiedergibt, m null wiedergibt, A 1 wiedergibt, B null wiedergibt;
(c) einer Einheit der Formel V, worin E und E' Sauerstoffatome wiedergeben, G eine direkte Bindung wiedergibt, Ar eine Einheit der Struktur (iv) wiedergibt, m und v null wiedergeben, z 1 wiedergibt und C und D 1 wiedergeben;
(d) einer Einheit der Formel V, worin E ein Sauerstoffatom wiedergibt, E' eine direkte Bindung wiedergibt, Ar eine Einheit der Struktur (ii) wiedergibt, m 0 wiedergibt, C 1 wiedergibt, D 0 wiedergibt; und
(e) einer Einheit der Formel V, worin E und E' ein Sauerstoffatom wiedergeben, Ar eine Struktur (i) wiedergibt, m 0 wiedergibt, C 1 wiedergibt, Z 1 wiedergibt, G eine direkte Bindung wiedergibt, v 0 wiedergibt und D 1 wiedergibt;

und eine zweite wiederkehrende Einheit umfasst, die ausgewählt ist aus den nachstehenden:

(f) einer Einheit der Formel IV, worin E und E' Sauerstoffatome wiedergeben, G eine direkte Bindung wiedergibt, Ar eine Einheit der Struktur (iv) wiedergibt, m 1 wiedergibt, w 1 wiedergibt, s 0 wiedergibt, A und B 1 wiedergeben;
(g) einer Einheit der Formel IV, worin E ein Sauerstoffatom wiedergibt, E' eine direkte Bindung wiedergibt, G eine direkte Bindung wiedergibt, Ar eine Einheit der Struktur (iv) wiedergibt, m und s null wiedergeben, w 1 wiedergibt, A und B 1 wiedergeben;
(h) einer Einheit der Formel V, worin E und E' Sauerstoffatome wiedergeben, G eine direkte Bindung wiedergibt, Ar eine Einheit der Struktur (iv) wiedergibt, m 1 wiedergibt, z 1 wiedergibt, v 0 wiedergibt, C und D 1 wiedergeben;
(i) einer Einheit der Formel V, worin E ein Sauerstoffatom wiedergibt, E' eine direkte Bindung wiedergibt, G eine direkte Bindung wiedergibt, Ar eine Einheit der Struktur (iv) wiedergibt, m und v null wiedergeben, z 1 wiedergibt, C und D 1 wiedergeben.

**2.** Membran nach Anspruch 1, worin das Ionen-leitfähige Polymer sulfoniert ist.

**3.** Membran nach Anspruch 1 oder Anspruch 2, worin das Ionen-leitfähige Polymer kristallin ist.

**4.** Membran nach einem vorangehenden Anspruch, worin das Ionen-leitfähige Polymer mindestens einige Ketoneinheiten in der Polymerkette einschließt.

**5.** Membran nach einem vorangehenden Anspruch, worin das Ionen-leitfähige Polymer eine erste wiederkehrende Einheit, ausgewählt aus wiederkehrenden Einheiten (b), (d) oder (e), in Kombination mit einer zweiten wiederkehrenden Einheit, ausgewählt aus Einheiten (f) oder (h), einschließt.

**6.** Membran nach einem vorangehenden Anspruch, worin das Ionen-leitfähige Polymer eine Biphenyleneinheit einschließt.

**7.** Membran nach einem vorangehenden Anspruch, worin das Ionen-leitfähige Polymer eine -O-Biphenylen-O-Einheit einschließt.

**8.** Membran nach einem vorangehenden Anspruch, worin ein Film von dem Ionen-leitfähigen Polymer auf das Trägermaterial laminiert ist.

**9.** Membran nach einem der Ansprüche 1 bis 7, worin das Trägermaterial porös ist und das Ionen-leitfähige Polymer in das Trägermaterial imprägniert ist.

**10.** Membran nach einem vorangehenden Anspruch, worin das Trägermaterial ein Polymer mit einer Einheit der Formel

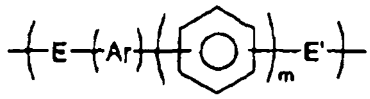 I

und/oder einer Einheit der Formel

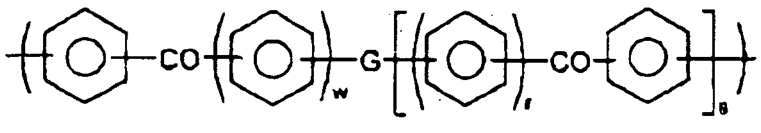 II

und/oder einer Einheit der Formel

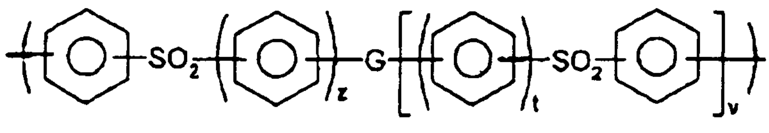 III

umfasst,
worin m, r, s, t, v, w und z unabhängig null oder eine positive ganze Zahl wiedergeben, E und E' unabhängig ein Sauerstoff- oder ein Schwefelatom oder eine direkte Bindung wiedergeben, G ein Sauerstoff- oder Schwefelatom, eine direkte Bindung oder eine Einheit -O-Ph-O- wiedergibt, worin Ph eine Phenylgruppe wiedergibt und Ar ausgewählt ist aus einer der nachstehenden Einheiten (i)* und (i) bis (x), die über eine oder mehrere von ihren Phenyleinheiten an benachbarte Einheiten gebunden sind,

(i)* 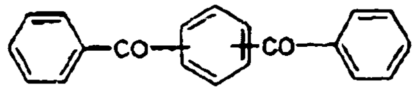

(i) 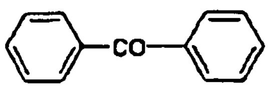 (ii) 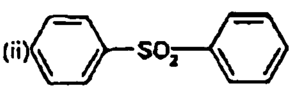

(iii) 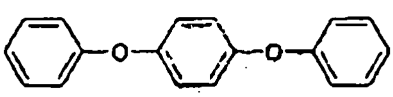 (iv) 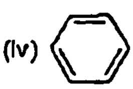

(v) 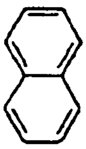 (vi) 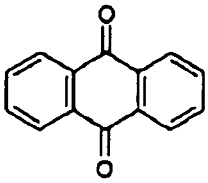 (vii) 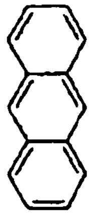

(viii) 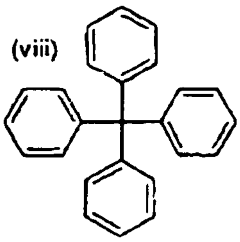 (ix) 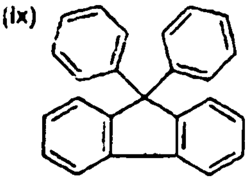 (x) 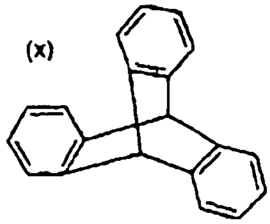

mit der Ausnahme, dass das Polymer des Trägermaterials entweder nicht sulfoniert ist (oder andersartig funktionalisiert ist, um Ionenaustauschstellen bereitzustellen) oder nur sulfoniert ist (oder andersartig funktionalisiert ist, um Ionenaustauschstellen bereitzustellen), an oder in dem Bereich der Oberfläche des Trägermaterials.

**11.** Membran nach Anspruch 10, worin das Trägermaterial ausgewählt ist aus einem Homopolymer der Formel IV, worin:

- E und E' Sauerstoffatome wiedergeben, G eine direkte Bindung wiedergibt, Ar eine Einheit der Struktur (iv) wiedergibt, m und s null wiedergeben, w 1 wiedergibt und A und B 1 wiedergeben;
- E ein Sauerstoffatom wiedergibt, E' eine direkte Bindung wiedergibt, Ar eine Einheit der Struktur (i) wiedergibt, m null wiedergibt, A 1 wiedergibt, B null wiedergibt;
- Ar eine Einheit (iv) wiedergibt, E und E' Sauerstoffatome wiedergeben, G eine direkte Bindung wiedergibt, m 0 wiedergibt, w 0 wiedergibt, s 1 wiedergibt, r 1 wiedergibt, A und B 1 wiedergeben;
- Ar eine Struktur (i)* wiedergibt, E ein Sauerstoffatom wiedergibt, E' eine direkte Bindung wiedergibt, m 0 wiedergibt, A 1 wiedergibt, B 0 wiedergibt;
- Ar eine Einheit (i) wiedergibt, E und E' Sauerstoffatome wiedergeben, G eine direkte Bindung wiedergibt, m null wiedergibt, w 1 wiedergibt, r 0 wiedergibt, s 1 wiedergibt und A und B 1 wiedergeben; oder
- Ar eine Einheit (iv) wiedergibt, E ein Schwefelatom wiedergibt, m 0 wiedergibt, E' eine direkte Bindung wiedergibt und B 0 wiedergibt;

oder ausgewählt ist aus:

- einem Homopolymer der Formel V, worin E ein Sauerstoffatom wiedergibt, E' eine direkte Bindung wiedergibt, Ar eine Einheit von Struktur (ii) wiedergibt, m 0 wiedergibt, C 1 wiedergibt, D 0 wiedergibt; und ausgewählt ist aus:
- einem Homopolymer der Formel V, worin E und E' Sauerstoffatome wiedergeben, m null wiedergibt, C und D 1 wiedergeben, z 1 wiedergibt, G eine direkte Bindung wiedergibt, v null wiedergibt und Ar eine Einheit der Struktur:

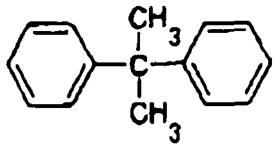

wiedergibt.

**12.** Membran nach einem vorangehenden Anspruch, worin das Ionen-leitfähige Polymermaterial ein Äquivalentgewicht (EW) von weniger als 800 g/Mol aufweist.

**13.** Leitfähiges Polymer und Trägermaterial, imprägniert mit dem leitfähigen Polymer, worin das Polymer einschließt: Polyaryletherketon- und/oder Polyarylethersulfoneinheiten; und Einheiten der Formel -O-$Ph_n$-O- (XX), worin Ph eine Phenylgruppe wiedergibt und n eine ganze Zahl von 2 oder größer wiedergibt, und worin Gruppen Ph der Einheiten (XX) sulfoniert sind.

**14.** Brennstoffzelle oder Elektrolyseur, der eine Compositmembran nach einem vorangehenden Anspruch einbezieht.

**15.** Verfahren zur Herstellung einer Compositmembran nach einem der Ansprüche 1 bis 13, wobei das Verfahren umfasst, dass ein leitfähiges Polymer, wie in einem der Ansprüche 1 bis 13 beschrieben, veranlasst wird, mit einem Trägermaterial, wie in einem der Ansprüche 1 bis 13 beschrieben, assoziiert zu sein.

**16.** Verfahren nach Anspruch 15, das Imprägnieren von porösem Trägermaterial mit leitfähigem Polymer einschließt.

**17.** Verfahren nach Anspruch 15 oder Anspruch 16, wobei eine erste Lösungsmittelformulierung ein polares aprotisches Lösungsmittel umfasst, worin ein leitfähiges Polymer bereitgestellt wird, und das Trägermaterial ein Material ist, das in dem polaren aprotischen Lösungsmittel nicht löslich ist, wobei das Verfahren einen Schritt des In-Kontakt-Bringens des Trägermaterials mit der ersten Lösungsmittelformulierung einschließt.

**18.** Verfahren nach Anspruch 15 oder Anspruch 16, wobei das Trägermaterial ein Textil ist und das Verfahren einen Schritt des In-Kontakt-Bringens des Textils mit einer ersten Lösungsmittelformulierung einschließt, umfassend ein erstes Lösungsmittel und das leitfähige Polymer, wobei das erste Lösungsmittel und das Trägermaterial derart ausgewählt sind, dass das erste Lösungsmittel eine Oberfläche des Trägermaterials solubilisiert.

**19.** Verfahren nach Anspruch 18, wobei das erste Lösungsmittel in der Lage ist, das Trägermaterial zu funktionalisieren, um Ionenaustauschstellen auf der Oberfläche davon bereitzustellen.

**20.** Verfahren nach Anspruch 19, wobei das erste Lösungsmittel weniger als 99 % Säure einschließt.

**21.** Verfahren nach Anspruch 15 oder Anspruch 16, wobei das Verfahren einschließt:

In-Kontakt-Bringen des Trägermaterials mit einer Lösungsmittelformulierung, die ein erstes Lösungsmittel umfasst, das das Trägermaterial solubilisiert; und
In-Kontakt-Bringen des Trägermaterials mit einem zweiten Lösungsmittel, um Phaseninversion zu veranlassen und das Trägermaterial porös zu machen.

**22.** Verfahren nach Anspruch 21, wobei das leitfähige Polymer in einem dritten Lösungsmittel bereitgestellt wird, und veranlasst wird, Poren in dem Trägermaterial zu penetrieren.

## Revendications

**1.** Membrane composite qui inclut un polymère conducteur d'ions et un matériau support pour le polymère, ledit polymère conducteur d'ions étant un copolymère aléatoire ou bloc d'au moins deux unités différentes IV et/ou V, dans lequel IV et V sont tels que montrés ci-dessous

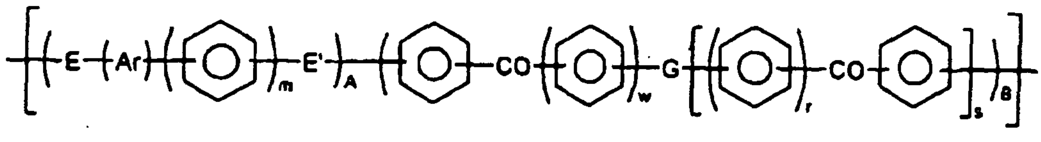 IV

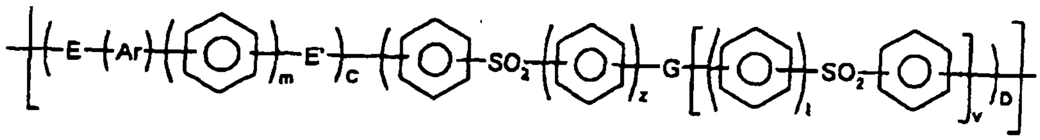

V

où au moins certaines des unités dans le copolymère sont fonctionnalisées pour fournir des sites d'échange d'ions ; où les fragments phényle dans les unités IV et V sont indépendamment facultativement substitués et facultativement réticulés ; et où m, r, s, t, v, w et z représentent indépendamment zéro ou un entier positif, E et E' représentent indépendamment un atome d'oxygène ou de soufre ou une liaison directe, G représente un atome d'oxygène ou de soufre, une liaison directe ou un fragment -O-Ph-O- où Ph représente un groupe phényle et Ar est choisi parmi les fragments (i), (ii) et (iv) suivants, chacun étant lié via un ou plusieurs de ses fragments phényle aux fragments adjacents

(i) 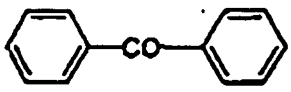

(ii) 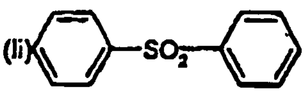

(iv) 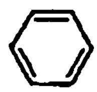

ledit polymère conducteur d'ions comprenant une première unité répétitive qui est choisie parmi les suivantes :

(a) une unité de formule IV dans laquelle E et E' représentent des atomes d'oxygène, G représente une liaison directe, Ar représente un fragment de structure (iv), m et s représentent zéro, w représente 1 et A et B représentent 1 ;
(b) une unité de formule IV dans laquelle E représente un atome d'oxygène, E' représente une liaison directe, Ar représente un fragment de structure (i), m représente zéro, A représente 1, B représente zéro ;
(c) une unité de formule V dans laquelle E et E' représentent des atomes d'oxygène, G représente une liaison directe, Ar représente un fragment de structure (iv), m et v représentent zéro, z représente 1 et C et D représentent 1 ;
(d) une unité de formule V dans laquelle E représente un atome d'oxygène, E' représente une liaison directe, Ar représente un fragment de structure (ii), m représente 0, C représente 1, D représente 0 ; et
(e) une unité de formule V dans laquelle E et E' représentent des atomes d'oxygène, Ar représente une structure (i), m représente 0, C représente 1, Z représente 1, G représente une liaison directe, v représente 0 et D représente 1 ;

et une seconde unité répétitive qui est choisie parmi les suivantes :

(f) une unité de formule IV dans laquelle E et E' représentent des atomes d'oxygène, G représente une liaison directe, Ar représente un fragment de structure (iv), m représente 1, w représente 1, s représente zéro, A et B représentent 1 ;
(g) une unité de formule IV dans laquelle E représente un atome d'oxygène, E' représente une liaison directe, G représente une liaison directe, Ar représente un fragment de structure (iv), m et s représentent zéro, w représente 1, A et B représentent 1 ;
(h) une unité de formule V dans laquelle E et E' représentent des atomes d'oxygène, G représente une liaison directe, Ar représente un fragment de structure (iv), m représente 1, z représente 1, v représente 0, C et D représentent 1 ;
(i) une unité de formule V dans laquelle E représente un atome d'oxygène, E' représente une liaison directe, G représente une liaison directe, Ar représente un fragment de structure (iv), m et v représentent zéro, z représente 1, C et D représentent 1.

2. Membrane selon la revendication 1, dans laquelle ledit polymère conducteur d'ions est sulfoné.

3. Membrane selon la revendication 1 ou la revendication 2, dans laquelle ledit polymère conducteur d'ions est cristallin.

4. Membrane selon l'une quelconque des revendications précédentes, dans laquelle ledit polymère conducteur d'ions inclut au moins des fragments cétoniques dans la chaîne polymère.

5. Membrane selon l'une quelconque des revendications précédentes, dans laquelle ledit polymère conducteur d'ions inclut une première unité répétitive choisie parmi les unités répétitives (b), (d) et (e), en combinaison avec une seconde unité répétitive choisie parmi les unités (f) et (h).

6. Membrane selon l'une quelconque des revendications précédentes, dans laquelle ledit polymère conducteur d'ions inclut un fragment biphénylène.

7. Membrane selon l'une quelconque des revendications précédentes, dans laquelle ledit polymère conducteur d'ions inclut un fragment -O-biphénylène-O-.

8. Membrane selon l'une quelconque des revendications précédentes, dans laquelle un film dudit polymère conducteur d'ions est formé en couche sur le matériau support.

9. Membrane selon l'une quelconque des revendications 1 à 7, dans laquelle le matériau support est poreux et ledit polymère conducteur d'ions est imprégné dans le matériau support.

10. Membrane selon l'une quelconque des revendications précédentes, dans laquelle ledit matériau support comprend un polymère ayant un fragment de formule

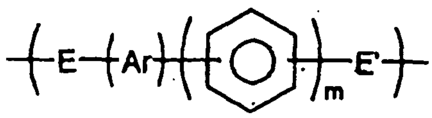

I

et/ou un fragment de formule

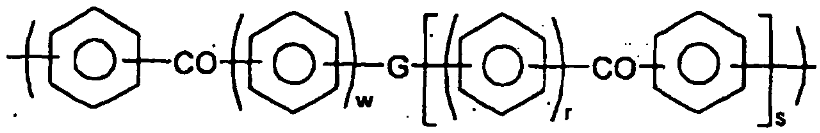

II

et/ou un fragment de formule

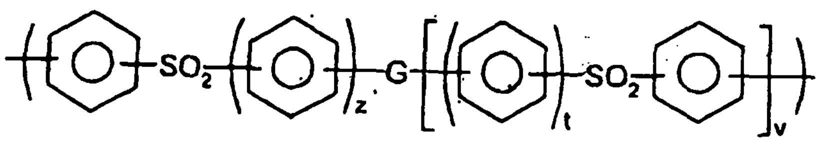

III

dans lesquelles m, r, s, t, v, w et z représentent indépendamment zéro ou un entier positif, E et E' représentent indépendamment un atome d'oxygène ou de soufre ou une liaison directe, G représente un atome d'oxygène ou de soufre, une liaison directe ou un fragment -O-Ph-O- où Ph représente un groupe phényle et Ar est choisi parmi les fragments suivants (i)* et (i) à (x) chacun lié via un ou plusieurs de ses fragments phényle aux fragments adjacents.

(i)* 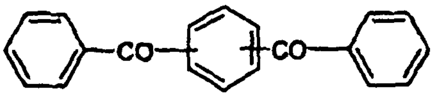

(i) 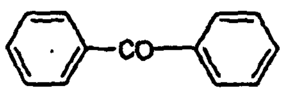

(ii) 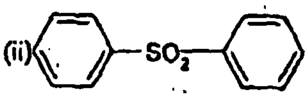

(iii) 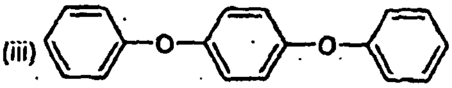

(iv) 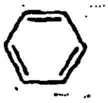

(v) 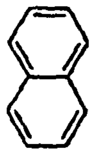

(vi) 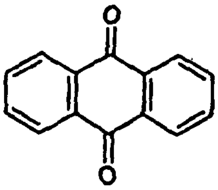

(vii) 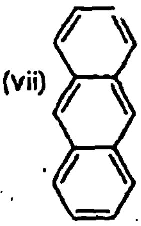

(viii) 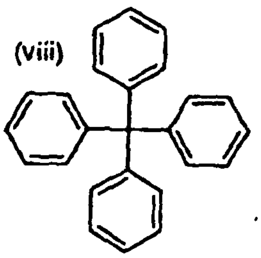

(ix) 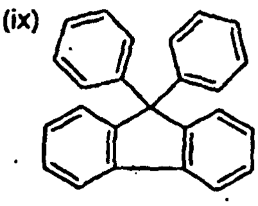

(x) 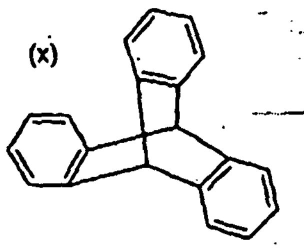

excepté que le polymère du matériau support est soit non sulfoné (ou autrement fonctionnalisé pour fournir des sites d'échange d'ions), soit est seulement sulfoné (ou autrement fonctionnalisé pour fournir des sites d'échange d'ions) au niveau, ou dans la zone, de la surface du matériau support.

**11.** Membrane selon la revendication 10, dans laquelle ledit matériau support est choisi à partir d'un homopolymère de formule IV dans laquelle :

- E et E' représentent des atomes d'oxygène, G représente une liaison directe, Ar représente un fragment de structure (iv), m et s représentent zéro, w représente 1 et A et B représentent 1 ;
- E représente un atome d'oxygène, E' représente une liaison directe, Ar représente un fragment de structure (i), m représente zéro, A représente 1, B représente zéro ;
- Ar représente un fragment (iv), E et E' représentent des atomes d'oxygène, G représente une liaison directe, m représente 0, w représente 0, s représente 1, r représente 1 et A et B représentent 1 ;
- Ar représente une structure (i)*, E représente un atome d'oxygène, E' représente une liaison directe, m représente 0, A représente 1, B représente 0 ;
- Ar représente un fragment (i), E et E' représentent des atomes d'oxygène, G représente une liaison directe, m représente 0, w représente 1, r représente 0, s représente 1 et A et B représentent 1 ; ou
- Ar représente un fragment (iv), E représente un atome de soufre, m représente 0, E' représente une liaison directe et B représente 0 ;

ou est choisi parmi :

- un homopolymère de formule V dans laquelle E représente un atome d'oxygène, E' représente une liaison directe, Ar représente un fragment de structure (ii), m représente 0, C représente 1, D représente 0 ; et est choisi parmi :
- un homopolymère de formule V dans laquelle E et E' représentent des atomes d'oxygène, m représente zéro, C et D représentent 1, z représente 1, G représente une liaison directe, v représente zéro et Ar représente un fragment de structure :

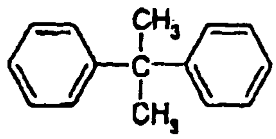

12. Membrane selon l'une quelconque des revendications précédentes, dans laquelle ledit matériau polymère conducteur d'ions a un poids équivalent (PE) inférieur à 800 g/mole.

13. Polymère conducteur et matériau support imprégné du polymère conducteur, ledit polymère incluant : des unités polyaryléthercétones et/ou polyaryléther-sulfones ; et des unités de formule -O-$Ph_n$-O- (XX), où Ph représente un groupe phényle et n représente l'entier 2 ou un entier supérieur à 2 et dans lesquels les groupes Ph des unités (XX) sont sulfonés.

14. Pile à combustible ou électrolyseur incorporant une membrane composite selon l'une quelconque des revendications précédentes.

15. Procédé de fabrication d'une membrane composite selon l'une quelconque des revendications 1 à 13, comprenant l'étape consistant à amener un polymère conducteur tel que décrit dans l'une quelconque des revendications 1 à 13 à être associé avec un matériau support tel que décrit dans l'une quelconque des revendications 1 à 13.

16. Procédé selon la revendication 15, qui inclut l'imprégnation d'un matériau support poreux avec un polymère conducteur.

17. Procédé selon la revendication 15 ou la revendication 16, dans lequel une première formulation de solvant comprend un solvant aprotique polaire dans lequel est prévu un polymère conducteur, ledit matériau support étant un matériau qui n'est pas soluble dans ledit solvant aprotique polaire, lequel procédé inclut une étape de mise en contact dudit matériau support avec ladite première formulation de solvant.

18. Procédé selon la revendication 15 ou la revendication 16, dans lequel ledit matériau support est un tissu, le procédé incluant une étape de mise en contact du tissu avec une première formulation de solvant comprenant un premier solvant et ledit polymère conducteur, dans lequel ledit premier solvant et ledit matériau support sont choisis de manière à ce que le premier solvant solubilise une surface du matériau support.

19. Procédé selon la revendication 18, dans lequel ledit premier solvant est capable de fonctionnaliser ledit matériau support pour obtenir des sites d'échange d'ions à la surface de celui-ci.

20. Procédé selon la revendication 19, dans lequel ledit premier solvant inclut au moins 99% d'acide.

21. Procédé selon la revendication 15 ou la revendication 16, incluant :

- la mise en contact dudit matériau support avec une formulation de solvant comprenant un premier solvant qui solubilise le matériau support ; et
- la mise en contact du matériau support avec un second solvant pour provoquer une inversion de phases et rendre ledit matériau support poreux.

22. Procédé selon la revendication 21, dans lequel ledit polymère conducteur est amené dans un troisième solvant et est amené à pénétrer dans les pores du matériau support.